# EUROPEAN PATENT APPLICATION

(11) **EP 2 940 444 A1**
(43) Date of publication of application: **04.11.2015**
(21) Application number: 15164144.6
(22) Date of filing: 17.04.2015
(51) Int. Cl.: G01L 3/10, H03K 17/16, G01D 5/14

(54) **Torque detection system and electric power steering apparatus**

(30) Priority: 25.04.2014 JP 2014092013
(71) Applicant: JTEKT CORPORATION, Osaka-shi Osaka 542-8502 (JP)
(72) Inventor: Aoki, Kaname, Osaka-shi, Osaka, 542-8502 (JP)
(74) Representative: Winter, Brandl, Fürniss, Hübner, Röss, Kaiser, Polte - Partnerschaft mbB

(57) **Abstract**

A torque detection system that is less likely to affect external equipment is provided. A sensor IC (70) in a torque detection device (40) includes: a magnetic detection element (81) with its output voltage changing in magnitude in accordance with the amount of twist of a torsion bar; and a processing device (85) that converts the output voltage into an output signal switched between a low level L and a high level H. The processing device includes a signal generation device (87) that forms inflection points P1 to P4 in order to reduce a change speed during a rising period T1 when the output signal is switched from the low level L to the high level H or a change speed during a falling period T3 when the output signal is switched from the high level H to the low level L.

## Description

### BACKGROUND OF THE INVENTION

### 1. Field of the Invention

The invention relates to a torque detection system and an electric power steering apparatus with the torque detection system.

### 2. Description of Related Art

A torque detection device is conventionally known which uses a sensor IC detecting a magnetic flux to detect torque applied to a detection target. Japanese Patent Application Publication No. 2013-253806 A (JP 2013-253806 A) describes an example of such a torque detection device with a sensor IC. This torque detection device has a permanent magnet and a yoke unit with a plurality of teeth arranged therein in a circumferential direction. The permanent magnet is fixed to an upper shaft of a column shaft. The yoke unit is fixed to a lower shaft of the column shaft. The upper shaft and the lower shaft are connected via a torsion bar. Thus, when torque acts on the upper shaft, the torsion bar is twisted. Consequently, the rotational phase of the permanent magnet deviates from the rotational phase of the teeth in the yoke unit, and magnetic flux density changes which acts between the permanent magnet and the teeth in the yoke unit. The sensor IC in the torque detection device includes a Hall element providing an output voltage changing with a change in magnetic flux density and a processing device that converts the output voltage from the Hall element into a digital signal.

The waveform of the digital signal has a low level and a high level. The waveform of the digital signal changes rapidly upon being changed from the low level to the high level and from the high level to the low level. When the waveform of the signal changes rapidly, external equipment is likely to be affected by the signal change. The torque detection device described in JP 2013-253806 A transmits digital signals to an external control device, and is thus likely to undergo a rapid change in waveform compared to a configuration that transmits analog signals. Accordingly, the external equipment present outside the torque detection device is likely to be affected.

The sensor IC has been described which detects a change in torque based on a change in output voltage. However, for a detection target other than torque, a similar phenomenon may occur in any sensor ICs as long as the sensor IC outputs a change in the state quantity using digital signals.

### SUMMARY OF THE INVENTION

An object of the present invention is to provide a torque detection system that is less likely to affect external equipment and an electric power steering apparatus with the system.

A torque detection system according to an aspect of the present invention includes:
a magnetic material;
a magnet with its relative position relative to the magnetic material changing in accordance with torque applied to a detection target;
a sensor IC including a magnetic detection element with its output voltage changing in magnitude in accordance with a change in relative position between the magnetic material and the magnet and a processing device that converts the output voltage of the magnetic detection element into an output signal, the processing device switching the output signal between a low level and a high level corresponding to the output voltage of the magnetic detection element; and
a control device that calculates the torque applied to the detection target based on the output signal output by the sensor IC, wherein
the processing device includes a signal generation device that controls at least one of a change speed during a rising period when the output signal is switched from the low level to the high level or a change speed during a falling period when the output signal is switched from the high level to the low level.

By the torque detection system, the signal generation device may control the change speed when the output signal is switched from the low level to the high level or from the high level to the low level, to a change speed at which external equipment is less likely to be affected.

In the torque detection system according to the above-described aspect, the signal generation device may form at least one inflection point in the waveform of the output signal and may reduce the change speed before or after the inflection point on a time axis. The torque detection system provides the inflection point to allow a reduction in the change speed when the output signal is switched from the low level to the high level or from the high level to the low level. Thus, the external equipment is less likely to be affected.

In the torque detection system according to the above-described aspect, the inflection point may be formed near the low level in the rising period, and the change speed on the low level side of the inflection point may be lower than the change speed on the high level side of the inflection point.

When the output signal starts to change from the low level to the high level, the waveform of the output signal changes rapidly from a state of a change speed of zero where the output signal is maintained constant to a state where the output signal changes toward the high level. Thus, the external equipment is likely to be affected. The torque detection system reduces the change speed of the output signal during such a period in which the external equipment is likely to be affected. As a result, the external equipment is less likely to be affected.

In the torque detection system according to the above-described aspect, the inflection point may be formed near the high level in the rising period, and the change speed on the high level side of the inflection point may be lower than the change speed on the low level side of the inflection point.

When the output signal reaches the high level, the waveform of the output signal changes rapidly from the changing state to the state of a change speed of zero where the output signal is maintained constant. Thus, the external equipment is likely to be affected. The torque detection system reduces the change speed of the output signal during such a period with a significant external adverse effect, with the result that the external equipment is unlikely to be affected.

In the torque detection system according to the above-described aspect, the inflection point may be formed near the high level in the falling period, and an absolute value of the change speed on the high level side of the inflection point may be lower than an absolute value of the change speed on the low level side of the inflection point.

When the output signal starts to change from the high level to the low level, the waveform of the output signal changes rapidly from the state of a change speed of zero where the output signal is maintained constant to the changing state. Thus, the external equipment is likely to be affected. The torque detection system reduces the change speed of the output signal during such a period in which the external equipment is likely to be affected. As a result, the external equipment is less likely to be affected.

In the torque detection system according to the above-described aspect, the inflection point may be formed near the low level in the falling period, and an absolute value of the change speed on the low level side of the inflection point may be lower than an absolute value of the change speed on the high level side of the inflection point.

When the output signal reaches the low level, the waveform of the output signal changes rapidly from the changing state to the state of a change speed of zero where the output signal is maintained constant. Thus, the external equipment is likely to be affected. The torque detection system reduces the change speed of the output signal during such a period in which the external equipment is likely to be affected. As a result, the external equipment is less likely to be affected.

Another aspect of the present invention provides an electric power steering apparatus including the torque detection system according to the above-described aspect. The electric power steering apparatus in this aspect is less likely to affect the external equipment.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a configuration diagram of a steering apparatus according to an embodiment of the present invention;
FIG. 2 is an exploded perspective view of a torque detection device according to the embodiment of the present invention;
FIG. 3 is a block diagram of a sensor IC according to the embodiment of the present invention;
FIG. 4 is a graph depicting the waveform of an output signal from the sensor IC according to the embodiment of the present invention;
FIG. 5 is a graph depicting a part of the waveform of the output signal in FIG. 4 in an enlarged view;
FIG. 6 is a graph depicting the waveform of an output signal from a sensor IC in another embodiment;
FIG. 7 is a block diagram of a sensor IC in yet another embodiment; and
FIG. 8 is a block diagram of a sensor IC in still another embodiment.

### DETAILED DESCRIPTION OF EMBODIMENTS

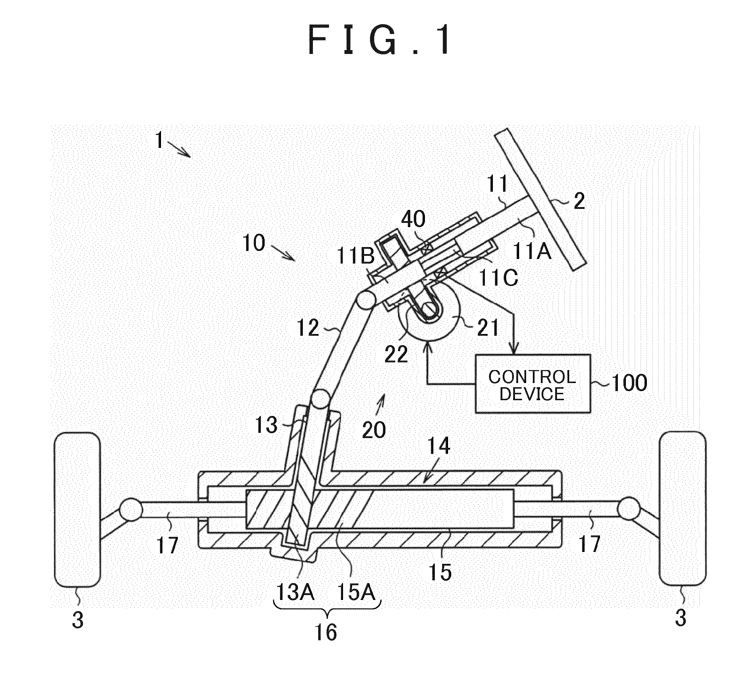

A configuration of a torque detection device that is an embodiment of the present invention and a configuration of an electric power steering apparatus with the torque detection device will be described with reference to FIG. 1. An electric power steering apparatus 1 includes a steering mechanism 10, a steered mechanism 14, an assist device 20, a torque detection device 40, and a control device 100.

The steering mechanism 10 includes a column shaft 11 connected to a steering wheel 2 at an upper end of the column shaft 11, an intermediate shaft 12 connected to a lower end of the column shaft 11, and a pinion shaft 13 connected to a lower end of the intermediate shaft 12.

The column shaft 11 includes an input shaft 11A, an output shaft 11B, and a torsion bar 11C. An upper end of the input shaft 11A is connected to the steering wheel 2. The input shaft 11A and the output shaft 11B are coupled via the torsion bar 11C so as to be relatively rotatable. The torsion bar 11C is twisted according to torque applied to the input shaft 11A and the output shaft 11B.

An upper end of the intermediate shaft 12 is connected to a lower end of the output shaft 11B. The pinion shaft 13 has pinion teeth 13A formed on the pinion shaft 13 over a predetermined area in an axial direction of the pinion shaft 13.

The steered mechanism 14 includes a rack shaft 15. The rack shaft 15 has rack teeth 15A formed on the rack shaft 15 over a predetermined area in an axial direction of the rack shaft 15. The rack teeth 15A mesh with the pinion teeth 13A. The rack teeth 15A and the pinion teeth 13A form a rack and pinion mechanism 16. The rack and pinion mechanism 16 converts rotating motion of the pinion shaft 13 into axial reciprocating motion of the rack shaft 15. Opposite ends of the rack shaft 15 are connected to steered wheels 3 via tie rods 17 and the like.

In the above-described configuration of the steering mechanism 10 and the steered mechanism 14, when a driver applies a rotational force to the steering wheel 2, the pinion shaft 13 rotates via the column shaft 11 and the intermediate shaft 12. The rotating motion of the pinion shaft 13 is converted into the axial reciprocating motion of the rack shaft 15 by the rack and pinion mechanism 16. The axial reciprocating motion of the rack shaft 15 causes the steered wheels 3 to turn via the tie rods 17 and the like.

The assist device 20 includes an assist motor 21, a speed reduction mechanism 22, and a control device 100. The speed reduction mechanism 22 is coupled to the assist motor 21 and the output shaft 11B and reduces the speed of rotation output from the assist motor 21 to transmit the rotation to the output shaft 11B. The assist device 20 applies the rotational torque of the assist motor 21 to the column shaft 11 as an assist torque that assists steering of the steering wheel 2.

The control device 100 calculates steering torque according to a driver's steering based on an output signal according to the amount of twist of the torsion bar 11C, for which signal is output by the torque detection device 40. The control device 100 calculates assist torque that assists the driver's steering based on the steering torque to control driving of the assist motor 21 based on the assist torque. The torque detection system according to the present invention corresponds to a system including the torque detection device 40 that detects torque and the control device 100 that calculates the steering torque.

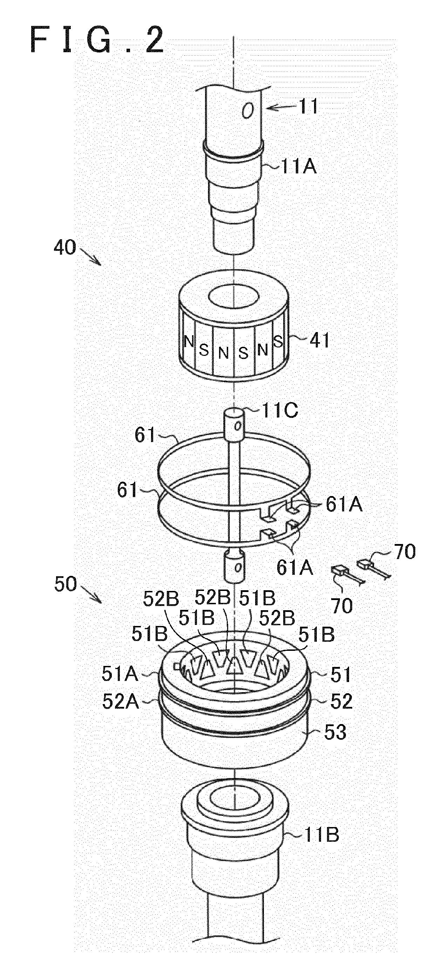

A general configuration of the torque detection device 40 will be described with reference to FIG. 2. The torque detection device 40 includes a permanent magnet 41, a yoke unit 50, magnetism collection rings 61, and a sensor IC 70.

The permanent magnet 41 is shaped like a cylinder and magnetized to alternately have N poles and S poles in a circumferential direction. The permanent magnet 41 is fixed to an outer peripheral surface of the input shaft 11A. The yoke unit 50 is shaped like a cylinder. The yoke unit 50 is arranged radially outside the permanent magnet 41 coaxially with the column shaft 11. The yoke unit 50 has a first magnetic yoke 51 and a second magnetic yoke 52 formed of a soft magnetic metal and a resin holder 53 that holds the magnetic yokes 51 and 52.

The first magnetic yoke 51 has a first annular portion 51A annularly formed and a plurality of first teeth 51B arranged at regular intervals in a circumferential direction of the first annular portion 51A. The first annular portion 51A is arranged coaxially with the column shaft 11. The first teeth 51B extend from an inner edge (not depicted in the drawings) of the first annular portion 51A toward the second magnetic yoke 52 along an axial direction of the column shaft 11.

The second magnetic yoke 52 has a second annular portion 52A annularly formed and a plurality of second teeth 52B arranged at regular intervals in a circumferential direction of the second annular portion 52A. The second annular portion 52A is arranged coaxially with the column shaft 11. The second teeth 52B extend from an inner edge (not depicted in the drawings) of the second annular portion 52A toward the first magnetic yoke 51 along the axial direction of the column shaft 11.

The holder 53 holds the first magnetic yoke 51 and the second magnetic yoke 52 such that the first teeth 51B face the second teeth 52B in a staggered manner.

The holder 53 is fixed to an outer peripheral surface of the output shaft 11B.

The magnetism collection rings 61 are formed of a soft magnetic metal so as to have a ring shape and arranged coaxially with the column shaft 11. The magnetism collection rings 61 are arranged radially outside the first annular portion 51A of the first magnetic yoke 51 and the second annular portion 52A of the second magnetic yoke 52. Each of the magnetism collection rings 61 has two sensor-facing portions 61A. The two sensor-facing portions 61A of one of the two magnetism collection rings 61 face the two sensor-facing portions 61A of the other magnetism collection ring 61 with a gap between the two sets each of the two sensor-facing portions 61A in the axial direction.

Now, the operation of the torque detection device 40 will be described below. With no torsional torque applied to between the input shaft 11A and the output shaft 11B, that is, with the torsion bar 11C untwisted, a central position of each of the teeth 51B and 52B in the magnetic yokes 51 and 52 coincides with the corresponding boundary between the N pole and S pole in the permanent magnet 41. In this regard, the same number of lines of magnetic force (the same amount of magnetic flux) from the N poles and from the S poles in the permanent magnet 41 enter and exit each of the teeth 51B and 52B in the magnetic yokes 51 and 52. Thus, no line of magnetic force leaks from the inside of the first magnetic yoke 51 or from the inside of the second magnetic yoke 52. Therefore, no magnetic flux leaks through between the first magnetic yoke 51 and the second magnetic yoke 52, and the sensor IC 70 detects a magnetic flux density of zero.

On the other hand, with torsional torque applied to between the input shaft 11A and the output shaft 11B, that is, with the torsion bar 11C twisted, the central position of each of the teeth 51B and 52B in the magnetic yokes 51 and 52 does not coincide with the corresponding boundary between the N pole and S pole in the permanent magnet 41. Thus, in the first magnetic yoke 51 and the second magnetic yoke 52, the number of lines of magnetic force from the N poles or from the S poles increases.

At this time, inside the first magnetic yoke 51 and the second magnetic yoke 52, the numbers of lines of magnetic force with opposite polarities increase. Thus, magnetic flux and magnetic flux density are generated between the first magnetic yoke 51 and the second magnetic yoke 52. The magnetic flux density between the first magnetic yoke 51 and the second magnetic yoke 52 is approximately proportional to the amount of twist (the absolute value of the angle of twist) of the torsion bar 11C, which is the state quantity of a detection target. Furthermore, the polarity of the magnetic flux density reverses depending on the direction of twist of the torsion bar 11C. The magnetic flux density is detected by the sensor IC 70 and retrieved as an output signal.

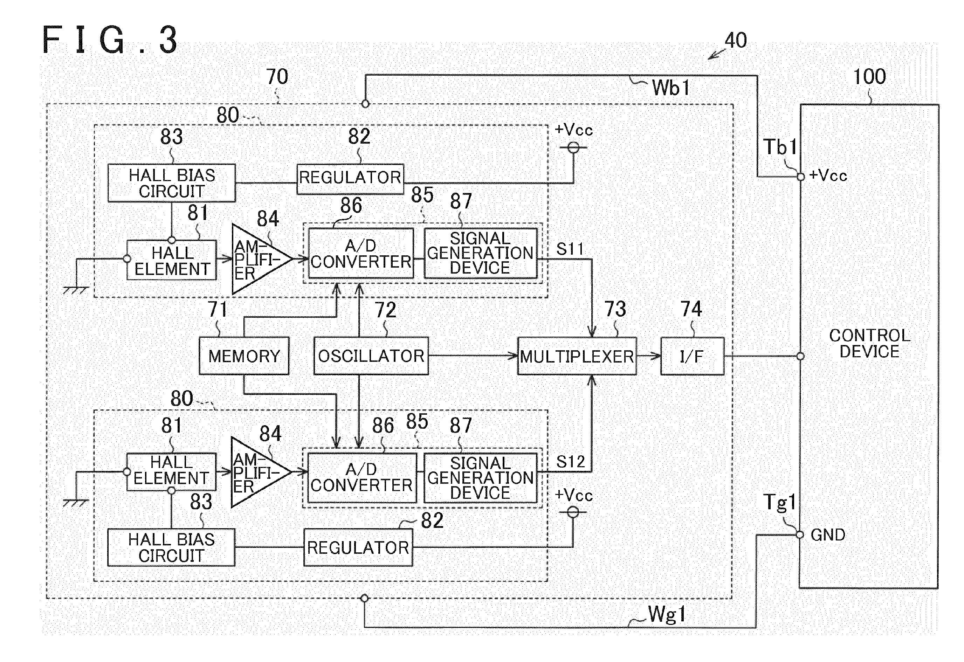

Now, an electrical configuration of the sensor IC 70 will be described. As depicted in FIG. 3, the sensor IC 70 is connected to a feeding terminal Tb1 of the control device 100 via a feeding line Wb1. Furthermore, the sensor IC 70 is connected to a ground terminal Tg1 of the control device 100 via a ground line Wg1. The sensor IC 70 uses, as an operating power supply, a voltage +Vcc applied through the feeding terminal Tb1 of the control device 100 via the feeding line Wb1. The sensor IC 70 outputs an output signal S including information on the angle of twist of the torsion bar 11C (see FIG. 2), to the control device 100 via an interface 74.

The sensor IC 70 includes a first detection device 80 that outputs an output signal S11 and a second detection device 80 that outputs an output signal S12. Each of the detection devices 80 includes a Hall element 81 that outputs a voltage according to the intensity of magnetism applied to the detection device 80. Furthermore, the detection device 80 includes a regulator 82 that regulates the power supply voltage +Vcc of the sensor IC 70 to a predetermined voltage corresponding to the detection device 80 and a Hall bias circuit 83 that applies a bias voltage to a Hall element 81 based on the voltage regulated by the regulator 82.

In each of the detection devices 80, a voltage signal output by the Hall element 81 is amplified by an amplifier 84. The amplified signal is then converted from an analog signal into a digital signal by a processing device 85. The processing device 85 has an analog/digital converter (hereinafter referred to as an A/D converter) 86 and a signal generation device 87. The signal generation device 87 includes, for example, a digital signal processor (DSP).

The A/D converter 86 converts an analog signal from the amplifier 84 into a digital signal. In generating a digital signal, the signal generation device 87 executes signal processing for correcting the analog signal from the amplifier 84. Specifically, the signal generation device 87 loads information needed for the signal processing from a nonvolatile memory 71 provided in the sensor IC 70. The memory 71 is formed of, for example, an electrically erasable programmable read-only memory (EEPROM). Various pieces of information needed for the signal processing are stored in the memory 71. The signal generation device 87 corrects the digital signal provided by the A/D converter 86 based on the information loaded from the memory 71 to generate the output signals S11 and S12. The signal generation device 87 generates the output signals S11 and S12 based on clock signals from an oscillator 72 provided in the sensor IC 70. Specifically, the signal generation device 87 switches on and off a switching circuit (not depicted in the drawings) in the signal generation device 87 to form pulses in the output signals S11 and S12. Furthermore, the signal generation device 87 controls a source current value (outflow current value) and a sink current value (inflow current value) for formation of pulses to control a change speed of a current value.

Each detection device 80 outputs the two output signals S11 and S12 including information on the angle of twist of the torsion bar 11C (see FIG. 2) to a multiplexer 73. The multiplexer 73 selectively outputs the output signals S11 and S12 to the interface 74, in other words, switches between the output signals S11 and S12. The interface 74 amplifies the output signal S11 or S12 received from the multiplexer 73 and outputs the amplified output signal S11 or S12 to the control device 100.

The control device 100 determines the angle of twist of the torsion bar 11C based on the output signal S11 or S12 output by the sensor IC 70. Specifically, upon loading the output signal S11 or S12 from the sensor IC 70, the control device 100 calculates the angle of twist of the torsion bar 11C using a predetermined map. Then, the control device 100 calculates the steering torque by multiplying the calculated angle of twist by a spring constant for the torsion bar 11C (see FIG. 2).

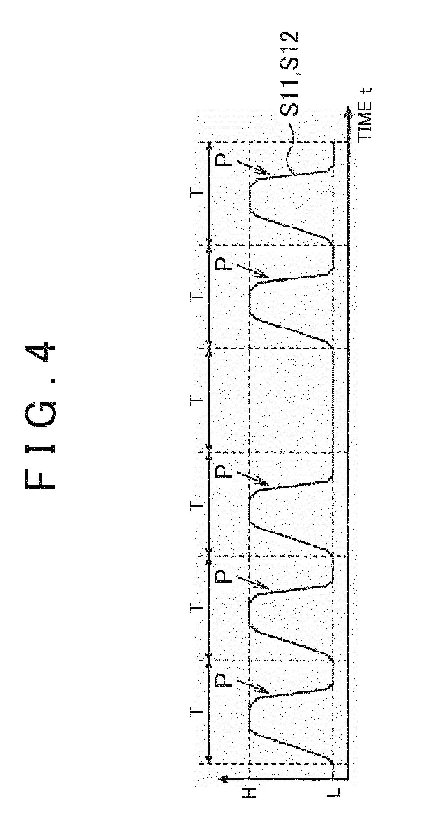

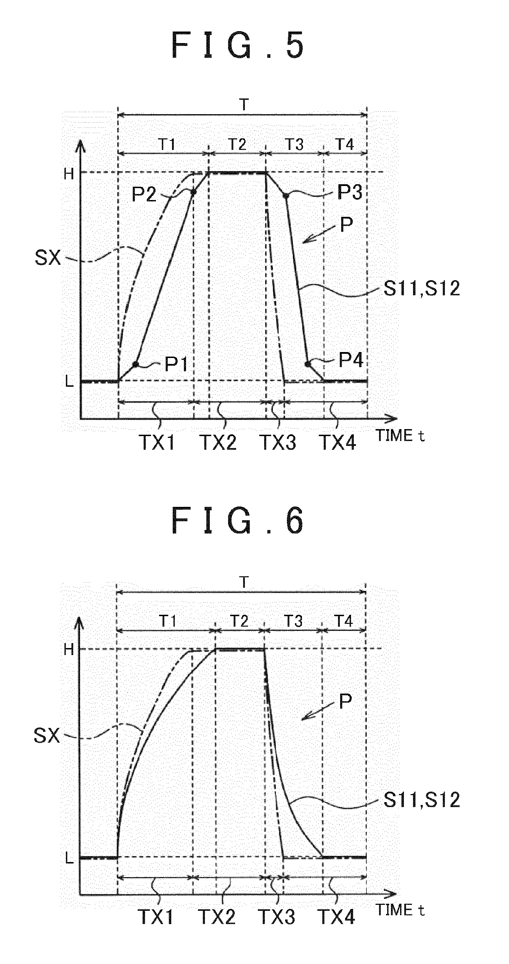

The waveforms of the output signals S11 and S12 will be described with reference to FIG. 4 and FIG. 5. The output signals S11 and S12 are signals represented by current values. As depicted in FIG. 4, the output signals S11 and S12 may be divided into a plurality of time sections for consideration. In time sections not including a pulse P, the current value is maintained at a low level L. On the other hand, in time sections including the pulse P, the current value is switched between the low level L and a high level H.

As depicted in FIG. 5, the time section including the pulse P includes a rising period T1 when the current value of the output signal S11 or S12 is switched from the low level L to the high level H, a maintaining period T2 when the current value is maintained at the high level H, a falling period T3 when the current value is switched from the high level H to the low level L, and a standby period T4 during which the current value is maintained at the low level L and which corresponds to a standby time until the next time section. An alternate long and two short dashes line in FIG. 5 depicts a comparative signal SX from a sensor IC that does not change a change speed V, as a comparative example. The sensor IC in the comparative example has a configuration and functions similar to the configuration and functions of the sensor IC 70 except that the sensor IC in the comparative example does not change the change speed V. The comparative signal SX has a period identical to the period of the output signals S11 and S12. The comparative signal SX includes a rising period TX1, a maintaining period TX2, a falling period TX3, and a standby period TX4.

In the rising period T1 of the output signal S11 or S12, a first inflection point P1 and a second inflection point P2 are formed where the change speed V of the current value changes. The first inflection point P1 is formed near the low level L in the rising period T1, that is, at a point at which the signal has a current value close to the low level L and which is earlier than the central point in time of the rising period T1, that is, closer to the last time section. The change speed V of the current value in an area on the low level L side of the first inflection point P1 is lower than the change speed V of the current value in an area on the high level H side of the first inflection point P1.

The second inflection point P2 is formed near the high level H in the rising period T1, that is, at a point at which the signal has a current value close to the high level H and which is later than the central point in time of the rising period T1, that is, closer to the maintaining period T2. The change speed V of the current value in an area on the high level H side of the second inflection point P2 is lower than the change speed V of the current value in an area on the low level L side of the second inflection point P2.

In the falling period T3, a third inflection point P3 and a fourth inflection point P4 are formed where the change speed V of the current value changes. The third inflection point P3 is formed near the high level H in the falling period T3, that is, on the maintaining period T2 side of the central point in time of the falling period T3. An absolute value of the change speed V of the current value on the high level H side of the third inflection point P3 is lower than an absolute value of the change speed V of the current value on the low level L side of the third inflection point P3.

The fourth inflection point P4 is formed near the low level L in the falling period T3, that is, on the standby period T4 side of the central point in time of the falling period T3. An absolute value of the change speed V of the current value on the low level L side of the fourth inflection point P4 is lower than an absolute value of the change speed V of the current value on the high level H side of the fourth inflection point P4.

Since the output signals S11 and S12 have the first inflection point P1 and the second inflection point P2, the rising period T1 is longer than the rising period TX1 in the comparative signal SX. In other words, the change speed V from the low level L to the high level H of the current value of the output signals S11 and S12 is lower the corresponding change speed V in the comparative signal SX.

Since the output signals S11 and S12 have the third inflection point P3 and the fourth inflection point P4, the falling period T3 is longer than the falling period TX3 in the comparative signal SX. In other words, an absolute value of the change speed V from the high level H to the low level L of the current value of the output signal S11 or S12 is lower the corresponding absolute value of change speed V in the comparative signal SX.

The maintaining period T2 in the output signal S11 or S12 is shorter than the maintaining period TX2 in the comparative signal SX. Furthermore, the standby period T4 in the output signal S11 or S12 is shorter than the standby period TX4 in the comparative signal SX.

The effects of the sensor IC 70 will be described with reference to FIG. 5. The inventors have noted that, when the waveform of the output signal S11 or S12 involves a rapid change, external equipment that is an electronic device other than the sensor IC is likely to be affected.

When the output signal S11 or S 12 starts to change from the low level L to the high level H, that is, when the last standby period T4 shifts to the rising period T1, the waveforms of the output signals change rapidly from the state of a change speed of zero where the output signal S11 or S12 is maintained constant to the state where the output signal changes to the high level.

When the output signal S11 or S12 reaches the high level H, that is, when the rising period T1 shifts to the maintaining period T2, the waveform of the output signal S11 or S12 changes rapidly from the changing state to the state of a change speed of zero where the output signal S11 or S12 is maintained constant.

When the output signal S11 or S12 starts to change from the high level H to the low level L, that is, when the maintaining period T2 shifts to the falling period T3, the waveform of the output signal S11 or S12 changes rapidly from the state of a change speed of zero where the output signal S11 or S12 is maintained constant to the changing state.

When the output signal S11 or S12 reaches the low level L, that is, when the falling period T3 shifts to the standby period T4, the waveform of the output signal S11 or S12 changes rapidly from the changing state to the state of a change speed of zero where the output signal S11 or S12 is maintained constant.

In the sensor IC 70, the signal generation device 87 forms the inflection points P1to P4 in the rising period T1 and the falling period T3, thus reducing the change speed V of the output signal S11 or S12 during the period when external equipment is likely to be affected. The reduced change speed V of the output signal S11 or S12 serves to smooth the corners of rising and falling edges formed in the pulse P in the output signal S11 or S12.

The sensor IC 70 of the present invention exerts the following effects.
(1) The sensor IC 70 allows the signal generation device 87 to control the change speed V when the output signal S11 or S12 is switched from the low level L to the high level H or when the level is switched from the high level H to the low level L, to the change speed V at which the external equipment is less likely to be affected. Furthermore, the signal generation device 87 controls the change speed V based on the information stored in the memory 71. Thus, changing the information stored in the memory 71 allows the waveform of the output signal S11 or S12 to be changed. Consequently, the convenience of the sensor IC 70 is improved.
(2) The sensor IC 70 uses the inflection points P1 to P4 to reduce the change speed V when the output signal S11 or S12 is switched from the low level L to the high level H or when the level is switched from the high level H to the low level L. Thus, the external equipment is less likely to be affected.
(3) The first inflection point P1 is formed near the low level L in the rising period T1, and the change speed V on the low level L side of the first inflection point P1 is lower than the change speed V on the high level side of the first inflection point P1. That is, the sensor IC 70 reduces the change speed V of the output signal S11 or S12 during period in which the external equipment is likely to be affected. As a result, the external equipment is less likely to be affected. Furthermore, the sensor IC 70 keeps the maintaining period T2 and the standby period T4 from being excessively reduced, compared to a configuration in which the change speed V of the entire rising period T1 is reduced. The sensor IC 70 thus allows suppression of a decrease in the amount of information in the output signal S11 or S12 per unit time, compared to a configuration in which the change speed V of the output signal S11 or S12 is reduced by increasing the period T.
(4) The second inflection point P2 is formed near the high level H in the rising period T1, and the change speed V on the high level H side of the inflection point P2 is lower than the change speed V on the low level L side of the second inflection point P2. That is, the sensor IC 70 reduces the change speed V of the output signal S11 or S12 during a period in which the external equipment is likely to be affected. As a result, the external equipment is less likely to be affected. Furthermore, the sensor IC 70 allows suppression of a decrease in the amount of information in the output signal S11 or S12 per unit time, compared to a configuration in which the change speed V of the entire rising period T1 is reduced.
(5) The third inflection point P3 is formed near the high level H in the falling period T3, and an absolute value of the change speed V on the high level H side of the inflection point P3 is lower than an absolute value of the change speed V on the low level L side of the third inflection point P3. That is, the sensor IC 70 reduces an absolute value of the change speed V of the output signal S11 or S12 during a period in which the external equipment is likely to be affected. As a result, the external equipment is less likely to be affected. Furthermore, the sensor IC 70 allows suppression of a decrease in the amount of information in the output signal S11 or S12 per unit time, compared to a configuration in which an absolute value of the change speed V of the entire falling period T3 is reduced.
(6) The fourth inflection point P4 is formed near the low level L in the falling period T3, and an absolute value of the change speed V on the low level L side of the fourth inflection point P4 is lower than an absolute value of the change speed on the high level H side of the fourth inflection point P4. That is, the sensor IC 70 reduces an absolute value of the change speed V of the output signal S11 or S12 during a period in which the external equipment is likely to be affected. As a result, the external equipment is less likely to be affected. Furthermore, the sensor IC 70 allows suppression of a decrease in the amount of information in the output signal S11 or S12 per unit time, compared to a configuration in which an absolute value of the change speed V of the entire falling period T3 is reduced.

The possible specific modes of the present sensor IC 70 are not limited to the modes illustrated in the above-described embodiment. Examples of other embodiments are illustrated below.

The first inflection point P1 may be formed at the central point in time of the rising period T1 or on the maintaining period T2 side of the central point in time of the rising period T1. The second inflection point P2 may be formed at the central point in time of the rising period T1 or on the last time section side of the central point in time of the rising period T1.

The third inflection point P3 may be formed at the central point in time of the falling period T3 or on the standby period T4 side of the central point in time of the falling period T3. The fourth inflection point P4 may be formed at the central point in time of the falling period T3 or on the maintaining period T2 side of the central point in time of the falling period T3.

Three or more inflection points may be formed in the rising period T1. Three or more inflection points may be formed in the falling period T3. One to three of the four inflection points P1 to P4 may be omitted. When any of the four inflection points P1 to P4 is omitted, an absolute value of the change speed V may be reduced below an absolute value of the change speed V in the comparative signal SX over the entire rising period T1, for example, as depicted in FIG. 6.

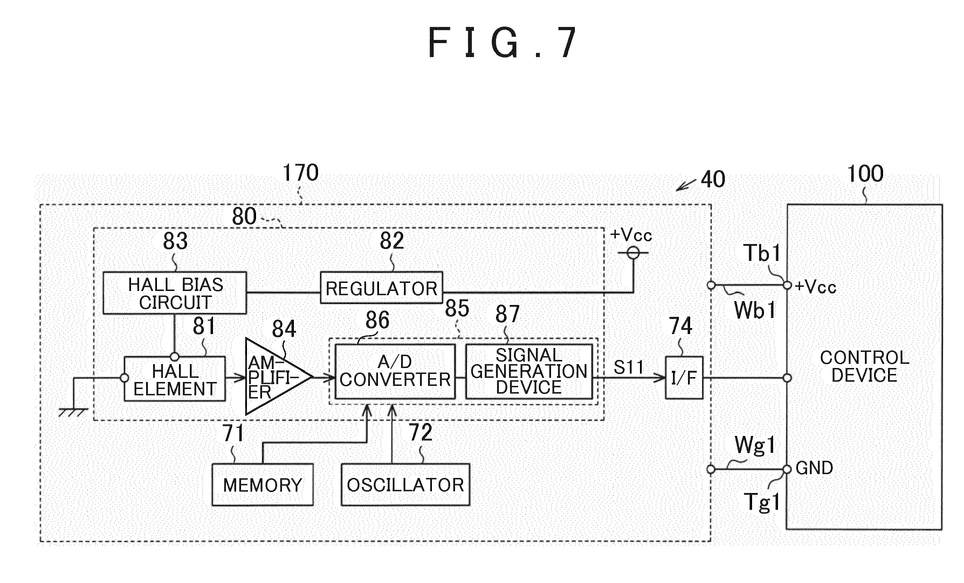

The sensor IC 70 may be changed to a sensor IC 170 with only one detection device 80 as depicted in FIG. 7. In this case, the multiplexer may be omitted as depicted in FIG. 7. In short, the configuration of the detection device 80 may be applied to any sensor IC as long as the sensor IC has at least one detection device 80.

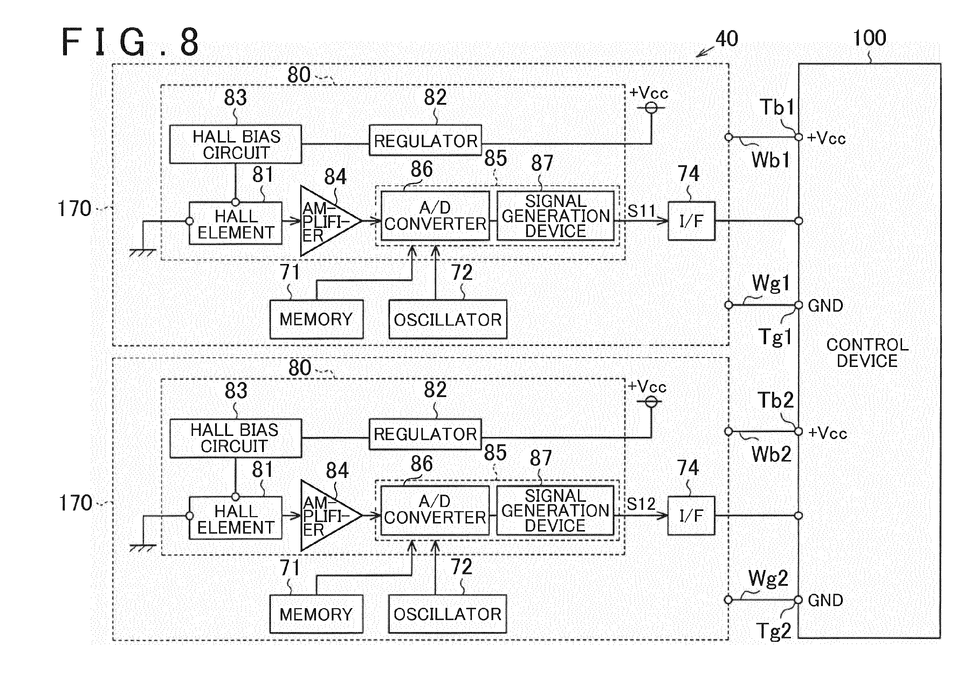

The number of sensor ICs 70 and 170 used in the torque detection device 40 may be changed as needed. For example, a first sensor IC 170 and a second sensor IC 170 may be provided as depicted in FIG. 8. The first sensor IC 170 is connected to the feeding terminal Tb1 of the control device 100 via the feeding line Wb1 and connected to the ground terminal Tg1 of the control device 100 via the ground line Wg1. The second sensor IC 170 is connected to a feeding terminal Tb2 of the control device 100 via a feeding line Wb2 and connected to a ground terminal Tg2 of the control device 100 via a ground line Wg2.

The multiplexer 73 may be omitted (FIG. 8). In this case, the output signals S11 and S12 generated by the respective detection devices 80 are output to the control device 100 via corresponding signal lines. The output signals S11 and S12 may use a potential (voltage) switched between the low level L and the high level H.

The sensor IC 70 may be applied to any equipment other than the torque detection device 40. For example, the sensor IC 70 may be applied to a sensor IC 70 that is a rotation angle sensor for detecting a change in the rotation angle of the steering wheel 2, which is a detection target. In short, the present invention is applicable to any sensor IC as long as the sensor IC has an element providing an output signal that changes in magnitude in accordance with a change in the state quantity of the detection target.

## Claims

1. A torque detection system comprising:
a magnetic material;
a magnet with its relative position relative to the magnetic material changing in accordance with torque applied to a detection target;
a sensor IC including a magnetic detection element with its output voltage changing in magnitude in accordance with a change in relative position between the magnetic material and the magnet and a processing device that converts the output voltage of the magnetic detection element into an output signal, the processing device switching the output signal between a low level and a high level corresponding to the output voltage of the magnetic detection element; and
a control device that calculates the torque applied to the detection target based on the output signal output by the sensor IC, wherein
the processing device includes a signal generation device that controls at least one of a change speed during a rising period in which the output signal is switched from the low level to the high level or a change speed during a falling period in which the output signal is switched from the high level to the low level.

2. The torque detection system according to claim 1, wherein
the signal generation device forms at least one inflection point in a waveform of the output signal and reduces the change speed before or after the inflection point on a time axis.

3. The torque detection system according to claim 2, wherein
the inflection point is formed near the low level in the rising period, and the change speed on the low level side of the inflection point is lower than the change speed on the high level side of the inflection point.

4. The torque detection system according to claim 2 or 3, wherein
the inflection point is formed near the high level in the rising period, and the change speed on the high level side of the inflection point is lower than the change speed on the low level side of the inflection point.

5. The torque detection system according to any one of claims 2 to 4, wherein
the inflection point is formed near the high level in the falling period, and an absolute value of the change speed on the high level side of the inflection point is lower than an absolute value of the change speed on the low level side of the inflection point.

6. The torque detection system according to any one of claims 2 to 5, wherein
the inflection point is formed near the low level in the falling period, and an absolute value of the change speed on the low level side of the inflection point is lower than an absolute value of the change speed on the high level side of the inflection point.

7. An electric power steering apparatus comprising the torque detection system according to any one of claims 1 to 6.
